(19) Europäisches Patentamt
European Patent Office
Office européen des brevets

(11) **EP 3 505 951 A1**

(12) **EUROPEAN PATENT APPLICATION**

(43) Date of publication:
**03.07.2019 Bulletin 2019/27**

(21) Application number: **18248125.9**

(22) Date of filing: **28.12.2018**

(51) Int Cl.:
*G01S 7/04* (2006.01)　　　*G01S 7/292* (2006.01)
*G01S 7/41* (2006.01)　　　*G01S 13/42* (2006.01)
*G01S 13/72* (2006.01)　　　*G01S 13/89* (2006.01)
*G01S 13/88* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2017　JP 2017254163**

(71) Applicant: **Furuno Electric Company Limited
Hyogo 662-8580 (JP)**

(72) Inventors:
• **YANAGI, Katsuyuki
Nishinomiya-City, Hyogo 662-8580 (JP)**
• **INOUE, Shinsuke
Nishinomiya-City, Hyogo 662-8580 (JP)**
• **YAMADA, Katsuo
Nishinomiya-City, Hyogo 662-8580 (JP)**

(74) Representative: **Müller Hoffmann & Partner
Patentanwälte mbB
St.-Martin-Strasse 58
81541 München (DE)**

(54) **A TARGET OBJECT DETECTING DEVICE, A METHOD OF DETECTING A TARGET OBJECT AND A COMPUTER READABLE MEDIUM**

(57)　A target object detecting device (1) is provided, which may include an acquisition part (25), a generation part (31a), and a detecting part (31b). The acquisition part (25) may acquire echo signals from target objects around a ship. The generation part (31a) may generate a first echo image based on the echo signals. The detecting part (31b) may input the first echo image into a model (41) built by machine learning, and may detect a first target object that is a target object other than a ship corresponding to the model (41), based on an output from the model.

FIG. 1

EP 3 505 951 A1

## Description

## Technical Field

The present disclosure relates to a device, method, and program which detect a target object around a ship, as well as a device, method, and program which learn a model used for detecting the target object around the ship.

## Background

Radar devices mounted on a ship display a radar image indicating target objects around the ship based on echo signals corresponding to radio waves emitted from a radar antenna. The target objects displayed in the radar image are typically other ships. Seamen visually check the radar image where other ships are displayed to grasp an exact situation around the ship, thereby realizing a safe cruise. Thus, a suitable gain adjustment is made in signal processing for generating the radar image from the echo signals so that the images of other ships are displayed clearly. Meanwhile, since echo signals caused by sea surface reflections, and rain and/or snow clutters may become noise of the ship images, a further adjustment of the signals is performed to remove the noise.

Here, the target objects needed to be observed by the radar device are not only other ships. For example, images of land and banks may also be useful information for grasping the situation around the ship. In addition, there is also a need for observation of a situation of birds. Although there are various reasons for detecting the birds, for example, if a flock of birds can be caught, the existence of a school of fish therebelow can naturally be predicted.

Generally, the radar device for ships is mainly built to display the image of other ships around the ship, and therefore, images of target objects other than ships are often scratched out as the noise. Particularly, since the echo signals from a bird, a small rock, a current rip, ice, rain, clouds, SART (Search And Rescue Transponder), etc. which are generally weak compared with the echo signal of a ship, they are difficult to clearly be caught in the radar image. Therefore, it is still difficult to accurately detect various target objects other than ships in the radar image, and it can be said that such technologies are still in a developmental stage. Moreover, without limiting to the radar devices, a similar demand for accurately detecting various target objects exists in the fields of other target object detecting devices, such as fish finders and sonar.

## Summary

One purpose of the present disclosure is to provide a device, method, and program which can accurately detect various target objects around a ship, and a device, method, and program which learn a model used for accurately detecting various target objects around the ship.

According to one aspect of the present disclosure, a target object detecting device is provided, which may include an acquisition part, a generation part, and a detecting part. The acquisition part may acquire echo signals from target objects around a ship. The generation part may generate a first echo image based on the echo signals. The detecting part may input the first echo image into a model built by machine learning, and may detect a first target object that is a target object other than a ship corresponding to the model, based on an output from the model.

## Effect

According to this configuration, the first echo image may be generated based on the echo signal from the target object. The first echo image may be inputted into the model built by machine learning, and based on the output from this model, the first target object other than ships may be accurately detected. Thus, various target objects around the ship (other than ships) may accurately be detected. In addition, according to another aspect of the present disclosure, the model suitable for detecting the target objects other than ships may be built.

## Brief Description of Drawings

The present disclosure is illustrated by way of example and not by way of limitation in the figures of the accompanying drawings, in which like reference numerals indicate like elements and in which:

Fig. 1 is a view illustrating the entire configuration of a radar device which is a target object detecting device according to one embodiment of the present disclosure;
Fig. 2 is a view schematically illustrating an appearance of a radar indicator;
Fig. 3 is a view illustrating one example of a radar screen including a radar image in a normal mode;
Fig. 4 is a view illustrating one example of the radar screen including a radar image in a bird mode;
Fig. 5A is a view illustrating one example of the radar image in the normal mode, and Fig. 5B is a view illustrating one example of the radar image in the bird mode based on the same echo signals as the radar image of Fig. 5A;
Fig. 6 is a view illustrating another example of the radar image in the bird mode;
Fig. 7 is an enlarged view of images of a ship and birds in the bird mode;
Fig. 8 is a view illustrating the entire configuration of a learning device according to one embodiment of the present disclosure;
Fig. 9 is a flowchart illustrating a flow of tracking of a flock of birds;

Fig. 10 is a conceptual view illustrating the tracking with a $\alpha\beta$ tracking filter;

Fig. 11A illustrates one example of a display output of information indicating that a flock of birds exists, and Fig. 11B illustrates another example of the display output of the information indicating that the flock of birds exists;

Fig. 12 is a flowchart illustrating a flow of displaying the existence of the flock of birds; and

Fig. 13 is a view illustrating the entire configuration of a target object detecting device according to a modification of the present disclosure.

**Detailed Description**

Hereinafter, a target object detecting device, method, and program, and a learning device, method, and program will be described with reference to the accompanying drawings according to one embodiment of the present disclosure.

<1. Configuration of Radar Device (Target Object Detecting Device)>

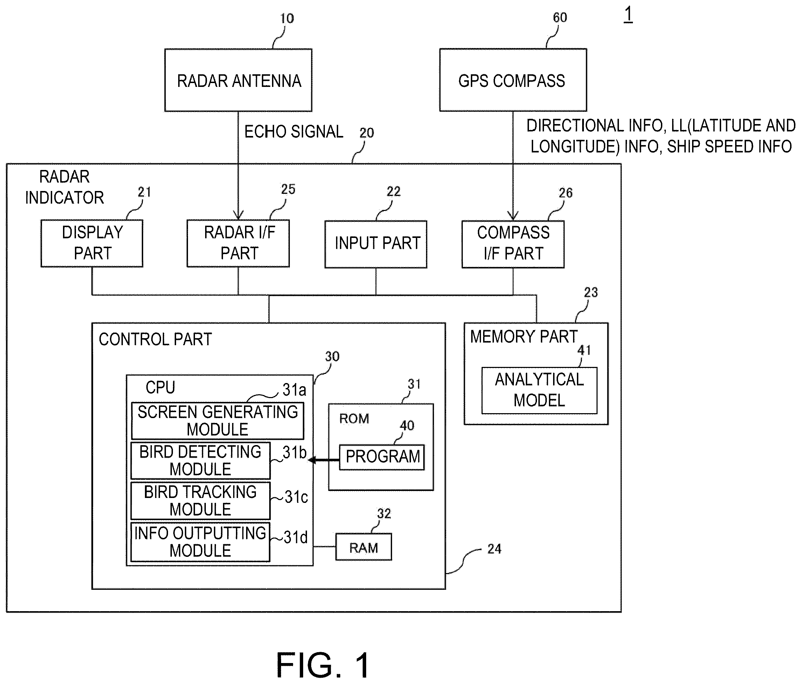

Fig. 1 illustrates the entire configuration of a radar device 1 as the target object detecting device according to one embodiment. The radar device 1 may be a device which assists cruising of a ship, and may be mounted on the ship. Note that the ship provided with the target object detecting device according the present disclosure is herein referred to as "the ship," to be distinguished from other ships. Note that the present disclosure may be applied to ships which typically travel on water or sea and may be referred to as surface ships, and may also be applied to other types of ships, which may include boats, dinghies, watercraft, and vessels. Further, the present disclosure may also be applied, if applicable, to submarines, aircrafts, and spaceships, as well as any types of vehicles which travel on the ground, such as automobiles, motorcycles, and ATVs.

The radar device 1 may include a radar antenna 10, and a radar indicator 20 connected to the radar antenna 10. The radar antenna 10 may emit a pulse-shaped radio wave, and receive an echo signal which is a reflected wave of the emitted radio wave at a target object. The radar antenna 10 may repeatedly transmit the radio wave and receive the corresponding echo signal, while swiveling in a horizontal surface, thereby scanning 360° around the ship. The echo signal from the target object, which is received by the radar antenna 10, may be sequentially converted into digital data by an A/D converter (not illustrated), and the converted echo signal may be sequentially outputted to the radar indicator 20.

The radar indicator 20 may be connected to a GPS compass 60 which is also mounted on the ship. The GPS compass 60 may measure, at a given time interval, information on a bow direction or heading of the ship (hereinafter, may be referred to as "the directional information"), information on latitude and longitude of the ship (hereinafter, may be referred to as "the LL information"), and information on a speed of the ship. The GPS compass 60 may sequentially output the information to the radar indicator 20.

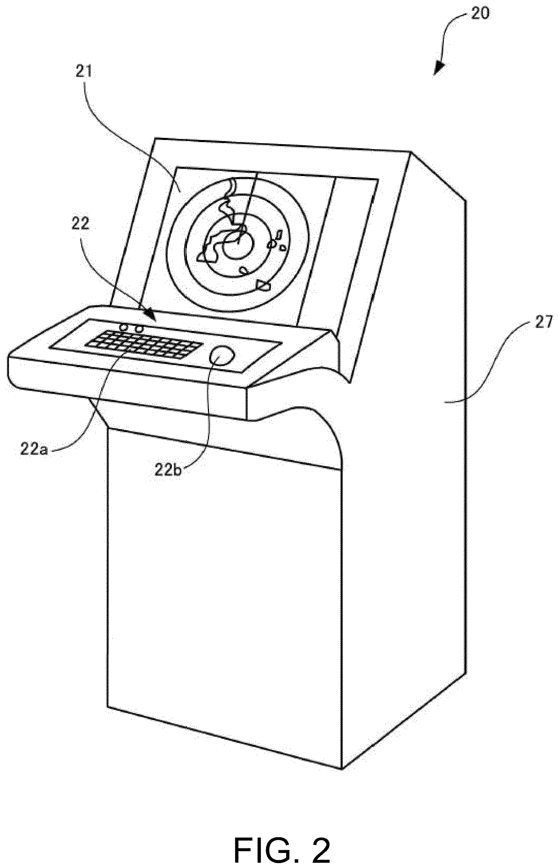

Fig. 2 illustrates an appearance of the radar indicator 20. The radar indicator 20 may be an apparatus which is operated by a user, and it may have a case 27 as illustrated in this figure. The radar indicator 20 may be provided with a display part 21 and an input part 22 at a front side of the case 27 where the user stands. The radar indicator 20 may also include a radar interface part 25, a memory part 23, a control part 24, and a compass interface part 26, as illustrated in Fig. 1. The radar interface part 25 may be a port for communicating with the radar antenna 10, and may receive the echo signals outputted from the radar antenna 10. The compass interface part 26 may be a port for communicating with the GPS compass 60, and receive the directional information, the LL information, and the ship speed information outputted from the GPS compass 60. The memory part 23 and the control part 24 may be accommodated in the case 27. These parts 21-26 may be communicatably connected with each other via bus lines.

The display part 21 may be a user interface which displays a screen for presenting a variety of information to the user, and in this embodiment, is comprised of a liquid crystal display. The input part 22 may be a user interface which receives various operations to the radar indicator 20 from the user, and in this embodiment, is comprised of a keyboard 22a and a trackball 22b. The input part 22 may also include a touch panel laminated on the display part 21.

The memory part 23 may be a nonvolatile storage device comprised of a hard-disk drive and/or a flash memory. The memory part 23 may store an analytical model 41 built by machine learning. Details of the analytical model 41 will be described later. The control part 24 may be comprised of a CPU 30, a ROM 31, and a RAM 32. The ROM 31 may store a computer program 40 which causes the CPU 30 to perform various operations. The CPU 30 may read and executes the program 40 in the ROM 31 to virtually operate as a screen generating module 31a, a bird detecting module 31b, a bird tracking module 31c, and an information outputting module 31d. Details of operations of these parts 31a-31d will be described later. Note that the program 40 may be stored not in the ROM 31 but in the memory part 23, or distributedly stored in both the memory part 23 and the ROM 31.

<2. Operation of Radar Device>

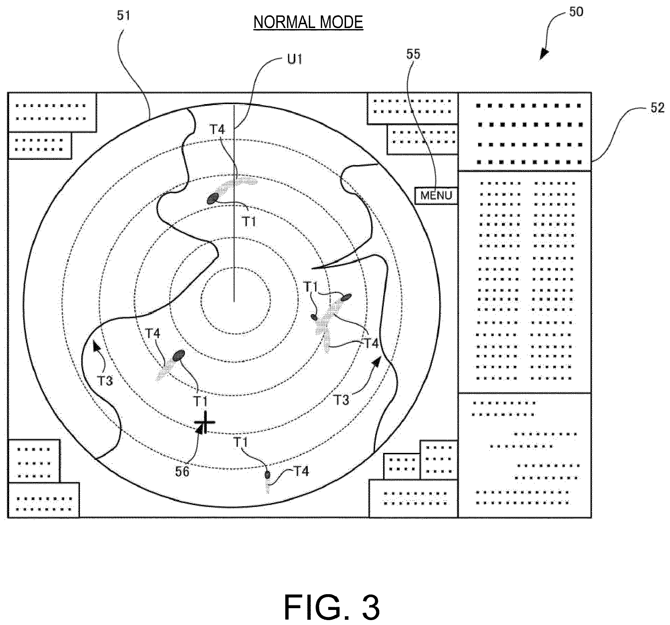

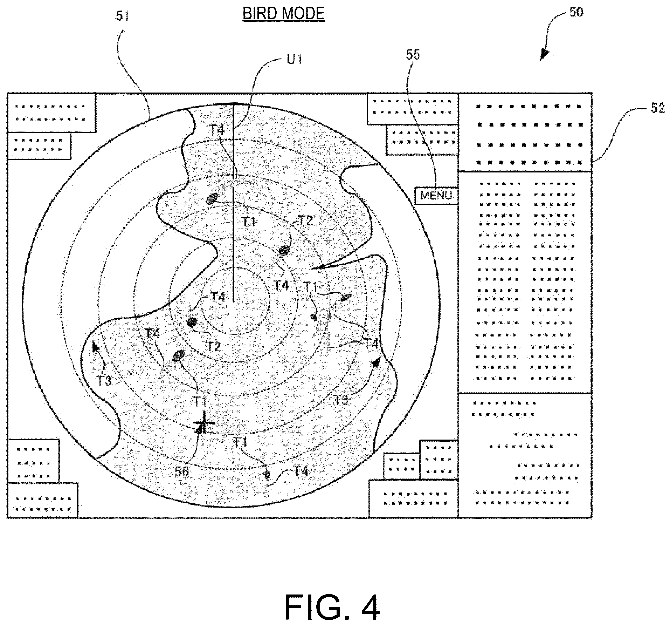

Next, various processings executed by the radar device 1 are described. The radar indicator 20 included in the radar device 1 can execute a display processing and a bird detection processing. The display processing may be to generate a radar screen 50 (see Figs. 3 and 4) which indicates a situation of the ship and one or more target objects around the ship based on the echo signals acquired by the radar interface part 25, and display the screen on the display part 21. On the radar screen 50, an image 51 which indicates the echo image of the target objects around the ship (hereinafter, referred to as "the radar image") may be displayed. The bird detection processing may be to detect based on the radar image 51 birds which exist around the ship, and more specifically, a flock of birds formed by birds making a group. Below, details of the display processing and the bird detection processing are described.

<2-1. Display Processing>

The display processing may be performed mainly by the screen generating module 31a. The screen generating module 31a may sequentially acquire the echo signals through the radar interface part 25, and then generate the radar screen 50 (see Figs. 3 and 4) based on the echo signals. More specifically, radar information on a distance, a direction, etc. to the target objects, such as other ships and flocks of birds, with respect to the ship may be calculated by analyzing the echo signals. The screen generating module 31a may generate the radar image 51 which indicates the echo image of the target objects around the ship based on the radar information. The radar image 51 may form a map in which locations of the target objects which exist in an area around the ship are indicated in a map manner. As illustrated in Figs. 3 and 4, the radar screen 50 may have a rectangular shape as a whole, and the radar image 51 having a circular shape is disposed on the radar screen 50. Here, one radar image 51 is generated from the echo signals for one rotation of the radar antenna 10 (scanning data). Each time new echo signals are acquired, the radar image 51 may be updated based on the new echo signals. Therefore, the user may grasp the situation around the ship on real time, by watching the radar image 51.

The screen generating module 31a may display, in addition to the radar image 51, an information display area 52 on the radar screen 50. In the example of Figs. 3 and 4, the information display area 52 may be located mainly along the right end of the radar screen 50 so as not to overlap with the radar image 51. Variety of information for assisting a cruise of the ship, for example, information on the ship and information of the environment around the ship are displayed in the information display area 52. The information on the ship includes, for example, the LL information on the ship, the directional information, and the ship speed information. The environmental information includes, for example, information on water temperature, water depth, wind direction, and wind velocity. Note that a part of the information displayed in the information display area 52 may be calculated based on information acquired from apparatuses, such as various measuring instruments, connected to the radar indicator 20 (e.g., the GPS compass 60).

A main menu button 55 may be displayed on the radar screen 50. The main menu button 55 may desirably be disposed so as not to overlap with the radar image 51. A cursor 56 is also displayed on the radar screen 50. The cursor 56 may be freely moved within the radar screen 50 by the user operating the input part 22. In this embodiment, when the user performs a given operation by using the input part 22 while the cursor 56 is located on the main menu button 55, the main menu button 55 may open hierarchically to show various sub menu buttons. The sub menu buttons may desirably be disposed so as not to overlap with the radar image 51. The user may execute a desired function implemented in the radar indicator 20 by operating the input part 22 and selecting a suitable one of the sub menu buttons.

There may be a normal mode (auto mode) and a bird mode in the radar image 51. The user may arbitrarily switch the mode between the normal mode and the bird mode by performing a given operation through the input part 22. The radar image 51 in the normal mode may be an echo image generated mainly for the purpose of clearly indicating images T1 of other ships. On the other hand, the radar image 51 in the bird mode may be an echo image generated for the purpose of indicating images T2 of flocks of birds which return weak echo signals as compared with other ships. The normal mode is typically used for observing movements of other ships while the ship is traveling to avoid collisions with other ships and grasping the locations of sister ships etc. On the other hand, the bird mode is typically used for finding out a flock of birds, which may lead to a school of fish normally existing below a flock of birds.

Fig. 3 illustrates one example of the radar screen 50 in the normal mode, and Fig. 4 illustrates one example of the radar screen 50 in the bird mode. Note that the radio wave from the radar antenna 10 may be reflected not only by other ships and flocks of birds but by various target objects, such as land and buoys. Therefore, on the radar image 51, images T3 of land etc. may also be displayed, other than the images T1 of other ships and the images T2 of flocks of birds.

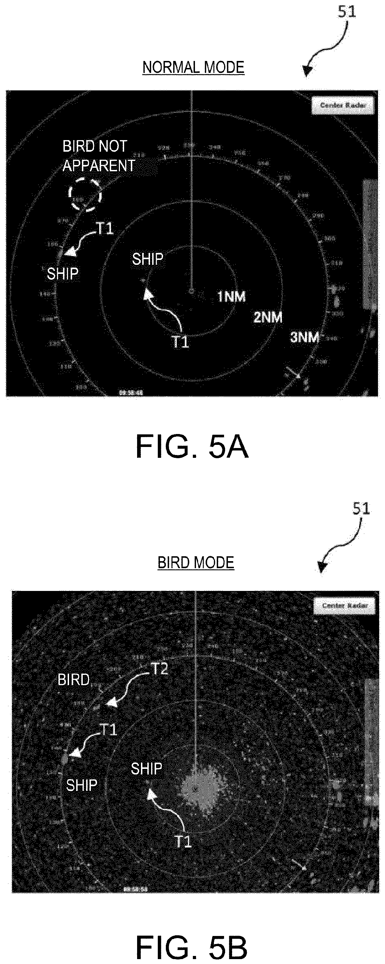

Fig. 5A illustrates one example of the radar image 51 in the normal mode, and Fig. 5B illustrates one example of the radar image 51 in the bird mode based on the same echo signals as the radar image 51 in Fig. 5A. As can be seen in these figures, in the bird mode, noise may be entirely apparent as compared with the normal mode. However, in the bird mode, the image T2 of a flock of birds, which is hardly apparent by the normal mode, may be caught. On the other hand, in the normal mode, since noise is entirely less, the images T1 of other ships may be indicated more clearly than in the bird mode.

The screen generating module 31a may adjust the echo signals according to the currently-selected mode, either the normal mode or the bird mode, when generating the radar image 51. In the bird mode, the screen generating module 31a may adjust the echo signals so that the reflected waves at flocks of birds, which are weaker than the reflected waves at other ships, may be caught, and then generate the radar image 51 based on the adjusted echo signals. The method of adjusting the echo signals includes, for example, an adjustment of a gain (sensitivity) and a removal of the noise caused by sea surface reflections, and rain and snow clutters. In the bird mode, the gain may be raised as compared with the normal mode, in order to catch the images T2 of flocks of birds based on the echo signals weaker than the images T1 of other ships. In addition, in the bird mode, levels of the removal of the sea surface reflections and the removal of the rain and snow clutters may be lowered as compared with the normal mode so that the images of flocks of birds will not disappear by an excessive noise removal. Moreover, in the bird mode, it may be desirable not to perform the removal of the rain and snow clutters.

Moreover, the radar image 51 may have a relative-motion mode and a true-motion mode. The relative-motion mode may be a mode in which the location of the ship is always set at a fixed location in the radar image 51 (typically, at the center of the radar image 51). On the other hand, the true-motion mode may be a mode in which the locations of stationary target objects, such as land, are fixed in the radar image 51. The user may switch the mode between the relative-motion mode and the true-motion mode by performing a given operation through the input part 22.

The screen generating module 31a may also display a heading bright line U1 on the radar image 51. The heading bright line U1 may be displayed on the radar image 51 by a line extending in the bow direction of the ship from the current location of the ship to the perimeter of the radar image 51. That is, an inner end of the heading bright line U1 may represent the current location of the ship. In the true-motion mode, the inner end of the heading bright line U1, i.e., the location of the ship, may be located at various locations on the radar image 51. On the other hand, in the relative-motion mode, the inner end of the heading bright line U1 may always be located at the fixed location, such as the center on the radar image 51.

The screen generating module 31a may also display on the radar image 51 the images T4 of echo trails of target objects, such as other ships and flocks of birds. For example, the images T4 of the echo trails of target objects may be formed by superimposing the echo images of target objects, such as the images T1-T3 indicated in the past radar images 51, on the latest radar image 51. The user may switch a display setting of the images T4 of the echo trails between "Display" and "Not Displaying" by performing a given operation through the input part 22.

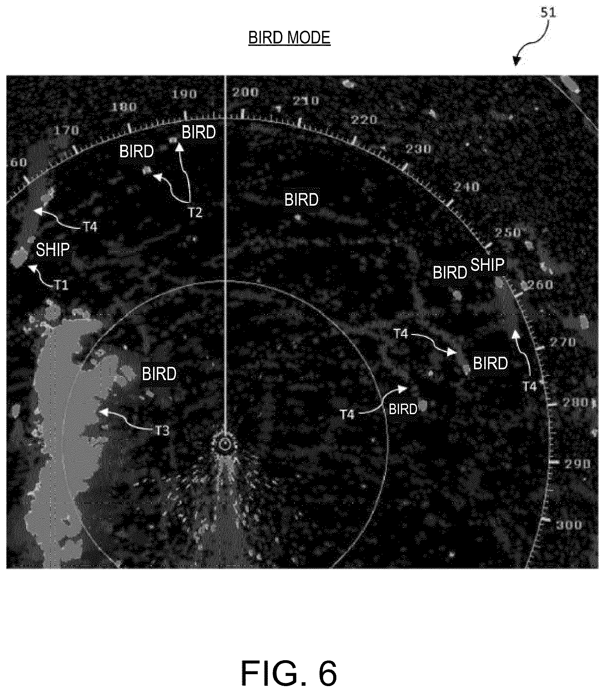

Fig. 6 illustrates another example of the radar image 51 in the bird mode. As illustrated in this figure, the images T4 of the echo trails of ships generally appear comparatively clearly on the radar image 51 not only in the normal mode but also in the bird mode. On the other hand, the images T4 of echo trails of birds, particularly flocks of birds may appear intermittently, and may be changed suddenly in the course, and/or wind. In order to more accurately catch such features of birds, it may be important to observe the absolute motion of the birds with respect to a stationary point, such as land, instead of observing the relative motion of the birds with respect to the ship. Therefore, the radar image 51 in the bird mode may desirably be an echo image obtained in the true-motion mode (hereinafter, referred to as "the true echo trail image"). Note that, even in the relative-motion mode, a similar echo image to the true echo trail image may be obtained by using the ship speed information acquired from the GPS compass 60.

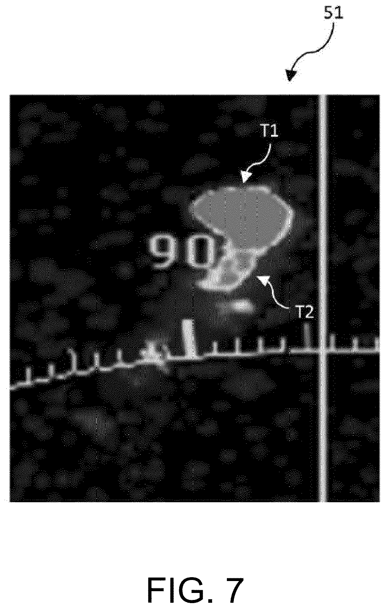

Generally, since birds fly higher and lower between a water surface and above the sky, a variation may be caused in the intensity of the echo signal of birds, particularly a flock of birds, resulting in a variation in the echo image. Fig. 7 is an enlarged view of the image T1 of another ship and the image T2 of a flock of birds in the bird mode.

As described above, the image T2 of a flock of birds and the image T4 of the echo trail may indicate different features from the image T1 of a ship and the image T4 of an echo trail. Therefore, the user may know the existence and the locations of the flocks of birds around the ship by finding out on the radar image 51 in the bird mode, the images T2 of the flocks of birds and the images T4 of the echo trails having the above features.

<2-2. Bird Detection Processing>

Next, based on the radar image 51, the bird detection processing in which flocks of birds are automatically detected is described. In the bird detection processing, flocks of birds may be detected based on the analytical model 41 which uses the radar image 51 as an input and uses information indicative of the existence of the flocks of birds as an output. The radar image 51 used in the bird detection processing of this embodiment may be the radar image 51 in the bird mode. The analytical model 41 may be built by machine learning, typically carried out beforehand, and information which defines the analytical model 41 may be stored in the memory part 23. Below, after describing a machine learning process of the analytical model 41, details of a flow of the bird detection processing will be described.

<2-2-1. Learning Process of Analytical Model>

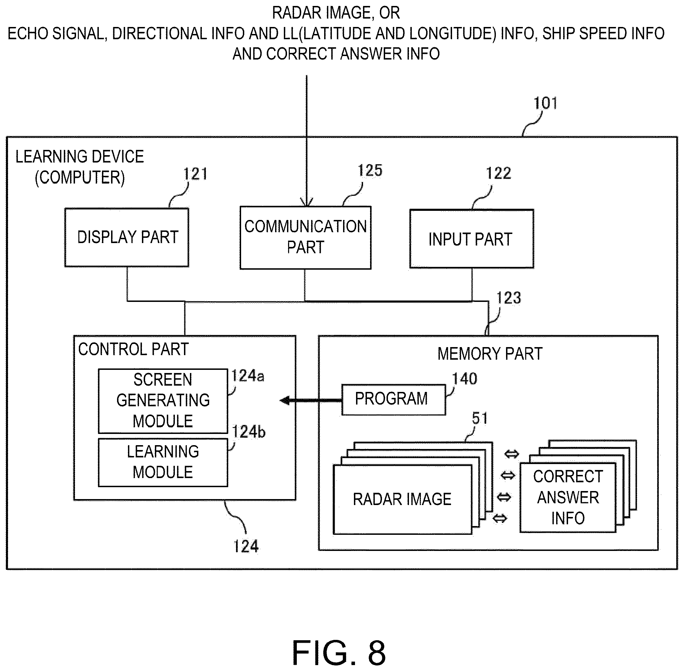

Fig. 8 illustrates the entire configuration of a learning device 101. The learning process of the analytical model 41 may be independent from a scene where the analytical model 41 is used after learning. Therefore, in this embodiment, the learning of the analytical model 41 may be performed not in the radar device 1 but mainly in the learning device 101; however, the learning function of a learning module 131c (described later) may of course be implemented in the radar device 1.

The learning device 101 may be a general-purpose computer as hardware, and include a display part 121, an input part 122, a memory part 123, a control part 124, and a communication part 125. These parts 121-125 may be communicatably connected with each other through bus lines.

The display part 121 may be a user interface which displays a screen for indicating a variety of information to the user, and may be comprised of a liquid crystal display. The input part 122 may be a user interface which receives various operations to the learning device 101 from the user, and may be comprised of a mouse, a keyboard, a touch panel, etc. The memory part 123 may be a nonvolatile storage device comprised of a hard disk and/or a flash memory. The control part 124 may be comprised of a CPU, a ROM, and a RAM, and read and execute a computer program 140 stored in the memory part 123 to virtually operate as a screen generating module 124a and a learning module 124b.

The communication part 125 may be a port for communicating with external apparatuses, and receives many radar images 51 in the bird mode from a device like the radar indicator 20. Alternatively, the communication part 125 may receive the echo signals, and if needed, the directional information, the LL information, and the ship speed information, from devices like the radar antenna 10 and the GPS compass 60. In the latter case, the screen generating module 124a may create the radar image 51 in the bird mode based on the echo signals, and if needed, the directional information, the LL information, and the ship speed information, by a similar method to the screen generating module 31a. The radar image 51 which is acquired by the communication part 125 or is generated by the screen generating module 124a may be stored in the memory part 123.

In the learning process, the echo signals when various target objects, such as other ships, rocks, current rips, ice, rain, clouds, and SART, exist in addition to flocks of birds, and if needed, the directional information, the LL information, and the ship speed information, or the radar image 51 based on the echo signals and the information, may be inputted into the communication part 125. In addition, information indicative of types of target objects caught in the echo signals or the radar image 51 (hereinafter, referred to as "the correct answer information") may be inputted to the communication part 125. Alternatively, the user may input the correct answer information through the input part 122. The correct answer information may indicate the location and type of each object. The inputted correct answer information may be stored in the memory part 123 so as to be associated with the radar image 51.

A set of the radar image 51 and the correct answer information may serve as teacher data for learning the analytical model 41. The analytical model 41 of this embodiment may be a convolutional neural network. The learning module 124b may learn the radar image 51 when the various target objects actually exist including flocks of birds, based on the correct answer information, and build the analytical model 41. For example, the learning module 124b sequentially reads the radar image 51 in the memory part 123, cuts a partial image indicative of the echo image of each target object from the radar image 51, and inputs the partial images into the analytical model 41. Then, the learning module 124b may acquire, as an output of the analytical model 41, information indicative of the type of each target object indicated by the inputted partial image, and update a parameter of the analytical model 41 so that the information indicative of the type of each target object is coincided with the correct answer information. Here, the parameters which are subjects of the learning are, for example, various coefficients which define the convolutional neural network as the analytical model 41. The analytical model 41 may be optimized while being applied with the teacher data one after another. Since various learning methods for a neural network with a teacher are known, detailed description is herein omitted; however, a back propagation algorithm may be used. As described above, the learning process will be completed, and the analytical model 41 is then derived. The derived analytical model 41 may be stored in the memory part 23 of the radar indicator 20.

<2-2-2. Details of Flow of Bird Detection Processing>

The bird detection processing of this embodiment is executed when the bird mode is selected in the radar indicator 20. When the radar image 51 in the bird mode is generated, first, the bird detecting module 31b may sequentially cut the partial image indicative of the echo image of each target object indicated in the radar image 51. Further, the bird detecting module 31b may sequentially input these partial images into the analytical model 41, and acquire the information indicative of the types of the target objects indicated in the inputted partial images as the output of the analytical model 41. Then, the bird detecting module 31b may sequentially determine whether each target object indicated in the partial image is a flock of birds based on the output.

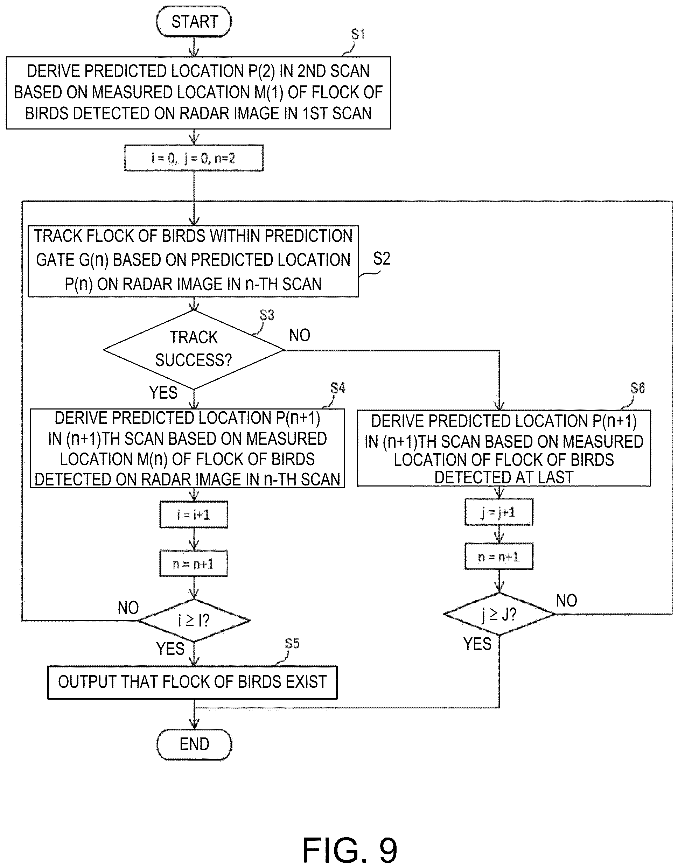

If the bird detecting module 31b determines that the target object indicated in the partial image is not a flock of birds, it may then continuously perform a similar processing to the next partial image or radar image 51. On the other hand, if the bird detecting module 31b determines that the target object indicated in the partial image is a flock of birds (i.e., if a flock of birds is detected in the partial image), a tracking processing to track the flock of birds may be performed as illustrated in Fig. 9. In this embodiment, the detection of the flock of birds based on the output of the analytical model 41 before starting the tracking processing may correspond to a "temporary" detection. In this embodiment, the tracking processing may be executed in response to the "temporary" detection in order to prevent a false detection of the flock of birds, and when the tracking of the flock of birds in the tracking processing is continuously succeeded, a final judgment that the flock of birds exists will be made. In this embodiment, information indicating that the flock of birds exists may be outputted in response to the final judgment. Here, even if the user wants to catch a school of fish below the flock of birds which is detected at the opposite side or the other side of land from the ship, it may not be sure whether the ship can reach there in the first place. Therefore, when there is an echo of a target object determined to be land, the bird detecting module 31b may skip an input to the analytical model 41 of the partial image which is located farther than the echo of the land from the ship. Thus, the bird detection processing to the other side of land can be omitted, resulting in reducing the calculation load. Note that the judgment of whether the echo is from land may be performed using a conventionally-known technique, and for example, the judgment may be made based on the magnitude of the echo.

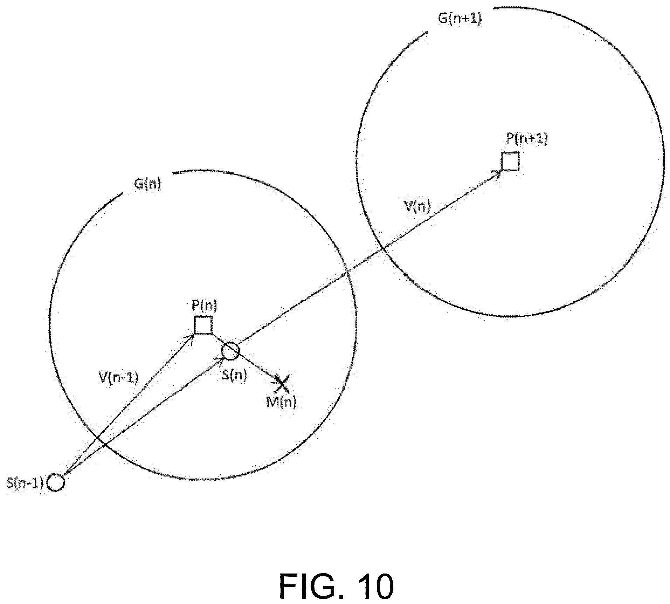

In the tracking processing of this embodiment, tracking by using a tracking filter, more specifically a $\alpha\beta$ filter, may be performed. Fig. 10 is a conceptual view illustrating the tracking processing with the $\alpha\beta$ tracking filter, where a linear predictor with a location smoothing constant $\alpha$ and a speed smoothing constant $\beta$ predicts from the n-th scan to the (n+1)th scan. Here, P(n) is a predicted location, M(n) is a measured location, S(n) is a smoothened location, V(n) is a smoothened speed, E(n) is a tracking error, G(n) is a prediction gate, and T is a sampling period. Note that "n" in a parenthesis represents a timing of the scan. Here, the predicted location P(n+1) at the (n+1)th scan may be calculated by the following formulas.

$$E(n) = M(n) - P(n)$$

$$S(n) = P(n) + \alpha E(n)$$

$$V(n) = V(n-1) + \beta E(n)/T$$

$$P(n+1) = S(n) + V(n)T$$

The tracking processing of Fig. 9 is described in detail. As described above, this tracking processing may be started each time the temporary detection of a flock of birds is performed, in order to track the flock of birds. Here, at Step S1, the bird tracking module 31c may set the location (coordinates) of the temporarily-detected flock of birds as a measured location M(1), and then derive a predicted location P(2) in the next scan based on the measured location M(1). More specifically, a predicted location P(1) and a smoothened location (S1) when the tracking begins (i.e., when n=1) are equal to the measured location M(1), and an initial value V(1) of the smoothened speed is defined beforehand. Then, the predicted location P(2) in the next scan is derived based on the smoothened location S(1) and the initial value V(1) of the smoothened speed.

At subsequent Step S2, the bird tracking module 31c may set a prediction gate G(n) based on the derived predicted location P(n). Then, the radar image 51 in the bird mode in the n-th scan may be acquired, and an image T2 of a flocks of birds is searched within the prediction gate G(n) (in other words, the flock of birds is tracked). More specifically, the partial images indicative of the echo images of the target objects may be cut from an area within the prediction gate G(n) on the radar image 51 in the n-th scan. Further, the bird tracking module 31c may input the partial images into the analytical model 41, and then acquire information indicative of the types of target objects indicated in the inputted partial image as the output of the analytical model 41. The bird tracking module 31c may then determine whether the target object indicated in the partial image is a flock of birds based on the output. As a result, if a flock of birds is detected, the bird tracking module 31c may determine that the tracking of the flock of birds is successful (Step S3), and then transits to Step S4. At Step S4, the location (coordinates) of the flock of birds detected on the radar image 51 in the current scan may be set as the measured location M(n), and the predicted location P(n+1) in the next scan may be derived based on the measured location M(n).

On the other hand, at Step S2, if the partial image indicative of the echo image of the target object cannot be cut from the area within the prediction gate G(n) on the radar image 51 in the n-th scan, or if the partial image can be cut but there is no partial image determined to be a flock of birds, the bird tracking module 31c may determine that the tracking of the flock of birds is failed (Step S3), and then transit to Step S6. At Step S6, the predicted location P(n+1) in the next scan may be derived based on the location (coordinates) of the flock of birds detected at the last.

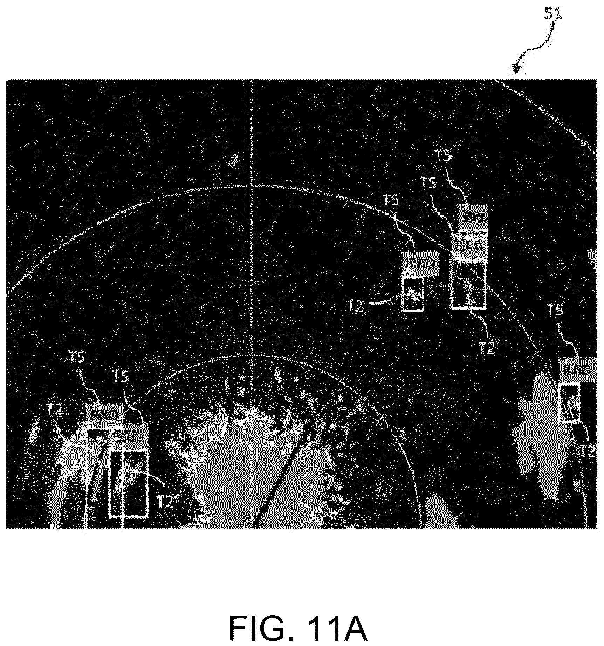

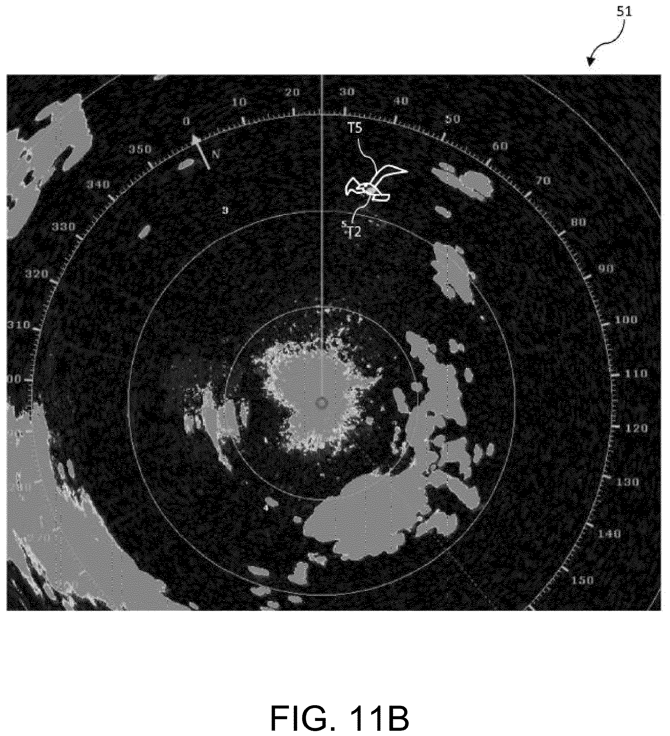

As illustrated in the flowchart of Fig. 9, if the tracking of a flock of birds at Step S3 is continuously succeeded I times (I is an integer equal to or greater than 2), the information outputting module 31d may output information indicative of the existence of the flock of birds (Step S5). Note that the phrase "the tracking is continuously succeeded I times" as used herein refers to that the tracking at Step S3 may be successively or intermittently succeeded I times before the tracking at Step S3 is successively or intermittently failed J times (J is an integer equal to or greater than 2). The output of the information outputting module 31d may be variously performed, and in this embodiment, while the information indicative of the existence of the flock of birds is displayed on the display part 21, sound such as alarm sound which reports that the flock of birds is discovered through a speaker etc. (not illustrated) may be outputted. Figs. 11A and 11B illustrate examples of the display screen which displays the information indicative of the existence of the flock of birds. Thus, a given symbol T5 can be displayed near or over the echo image detected as the image T2 of a flock of birds on the radar image 51 in the bird mode. In the example of Fig. 11A, the symbol T5 is a box surrounding the echo image detected as the image T2 of the flock of birds, and in the example of Fig. 11B, the symbol T5 is an icon displayed so as to be superimposed on the echo image detected as the image T2 of the flock of birds. The symbol T5 may desirably be displayed using a different color from other areas on the radar image 51 and/or blinking, in order to exaggerate the existence of the flock of birds. The color of the symbol T5 may be changed while being displayed.

At Step S5, a text message expressing that the flock of birds is detected may also be displayed in addition to the symbol T5. Moreover, in the above processing, since the moving speed V(n) of the flock of birds is calculated, a vector symbol representing the speed and direction of the flock of birds may also be displayed in addition to or instead of the symbol T5.

When the information indicating that the flock of birds exists is outputted, the tracking processing of Fig. 9 may be ended. On the other hand, also when the tracking of the flock of birds is not continuously succeeded I times, it may be determined that the flock of birds broke off, and the tracking processing of Fig. 9 may be ended.

By the above tracking processing, a confirmation of whether the flock of birds really exists may be made after the "temporary" detection of the flock of birds based on the analytical model 41. That is, in the above tracking processing, the past detection results of the flock of birds and the latest detection result of the flock of birds may be averaged in time. Therefore, even if a flock of birds is detected based on the analytical model 41, it will not be finally detected as a flock of birds because of the time average, if the probability of occurrence is low. Moreover, although a flock of birds exists, and even when the flock of birds could not be detect I or less times due to the omission in detection etc., the tracking can be continued without missing the flock of birds. Therefore, a false detection of the flock of birds may be prevented to improve the detection accuracy of the flock of birds. Moreover, the bird tracking module 31c may skip the tracking processing of a flock of birds temporarily detected by the bird detecting module 31b in an area located farther than an echo of a target object determined as land, from the ship. Thus, the bird tracking processing for the other side of land can be omitted to reduce the calculation load.

Note that, if it is finally determined that the flock of birds exists and the tracking processing of Fig. 9 is completed through Step S5, the same flock of birds can still be continuously tracked. For example, the bird tracking module 31c may continue tracking of the flock of birds in a similar way to Steps S2-S4 and S6, and continue displaying the symbol T5 at the location of or near the latest images T2 of the flock of birds, unless the tracking is failed. On the other hand, if the tracking is failed, the symbol T5 may be eliminated from the radar image 51.

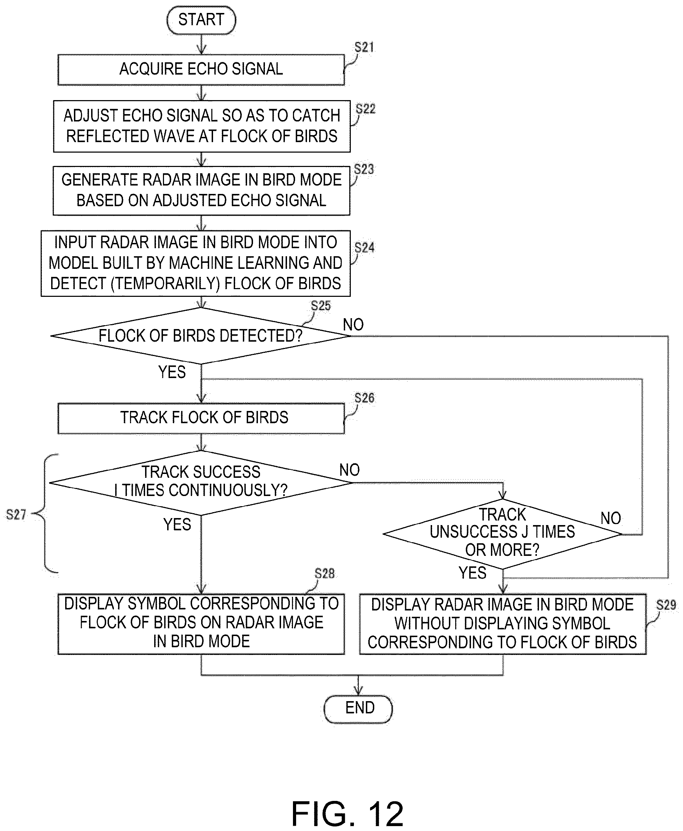

Fig. 12 is a flowchart which summarizes the already-described series of processings until the existence of the flock of birds is displayed on the radar image 51. As illustrated in this figure, the echo signal may be first acquired through the radar interface part 25 (Step S21). The screen generating module 31a may then adjust the acquired echo signal so that the reflected wave at the flock of birds can be caught (Step S22), and the radar image 51 in the bird mode may be generated based on the adjusted echo signal (Step S23). Next, the bird detecting module 31b may input the radar image 51 into the analytical model 41, and the temporary detection of the flock of birds may be performed (Step S24). If the flock of birds is temporarily detected (Step S25), the bird tracking module 31c may track the flock of birds (Step S26), and if the flock of birds is not temporarily detected (Step S25), the screen generating module 31a may display the radar image 51 in the normal bird mode (Step S29). On the other hand, if the tracking of the flock of birds is continuously succeeded (Step S27), the screen generating module 31a may display the radar image 51 in the normal bird mode, and the information outputting module 31d may display the symbol T5 corresponding to the flock of birds over the radar image 51 (Step S28).

<3. Features>

Although the radar image 51 in the normal mode can catch a flock of birds depending on the adjustment of sensitivity, the user may overlook the echo image based on the flock of birds because the echo signal of the flock of birds is weak. In this regard, since the radar image 51 in the bird mode can catch the image T2 of the flock of birds comparatively clearly, it is useful. However, for example, a user of a pleasure boat seldom uses the bird tracking function, and the image T2 of the flock of birds does not appear so frequently, either. Therefore, even if the image T2 of the flock of birds appears on the radar image 51, it may be difficult for this type of user who is not used to recognize the image T2 to be a flock of birds. Moreover, for a safe cruise, the user may not focus only on the existence of the flock of birds by always watching the radar image 51. In this regards, according to the bird detection processing of this embodiment, the flock of birds may be automatically detected and the detection result may be outputted intelligibly for the user. In addition, since the flock of birds is detected with high precision by the machine learning and the tracking processing, the user may discover the flock of birds easily and accurately.

<4. Modifications>

As described above, although one embodiment of the present disclosure is described, the present disclosure is not limited to the above embodiment and various changes may be possible without departing from the subject matters of the present disclosure. For example, the following changes may be possible. Note that the following modifications may suitably be combined.

<4-1>

Although the bird detection processing of the above embodiment is applied to the ship radar device 1, it is also similarly applicable to other detecting devices, such as radars for weather and aviation, a fish finder, and sonar.

<4-2>

In the above embodiment, the example in which birds are detected based on the analytical model 41 is illustrated. However, based on the output of the analytical model 41, the analytical model 41 may be built so that at least one of a school of fish, a rock, a current rip, ice, rain, clouds, and SART may be detected, instead of or in addition to the birds. Note that the function for detecting the school of fish may desirably be mounted on an apparatus, such as the fish finder and sonar. Moreover, as the function for detecting the school of fish, the analytical model 41 may also be built so that the fish types, such as sardine and tuna, can be distinguished based on the output of the analytical model 41. Moreover, the function for detecting ice may desirably be mounted on an apparatus mounted on a ship which cruises the Arctic Ocean etc.

Moreover, although in the above embodiment the echo signals when various target objects, such as, in addition to the flocks of birds, other ships, rocks, current rips, ice, rain, clouds, and SART, exist are used as the teacher data for learning of the analytical model 41, the analytical model 41 may also learn with teacher data only including the echo signals when the flocks of birds exist.

<4-3>

Although the $\alpha\beta$ filter is used in the tracking processing of the above embodiment, other filters, such as a $\alpha\beta\gamma$ tracking filter and a Kalman filter, can of course be used.

<4-4>

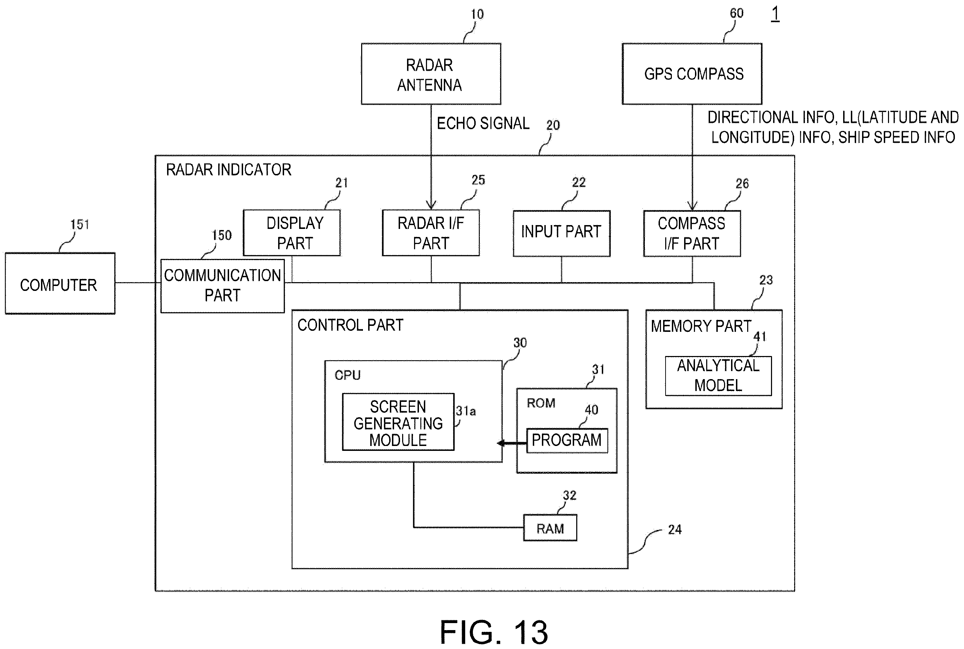

In the above embodiment, the bird detection processing may be executed by the radar indicator 20. However, as illustrated in Fig. 13, the bird detection processing may also be performed in an external device 151 which wiredly or wirelessly connected with the radar indicator 20 (e.g., it may be a computer or a cloud server). In this case, the echo signals inputted into the radar indicator 20 from the radar antenna 10 (and the directional information, the LL information, and the ship speed acquired from the GPS compasses 60), or the radar image 51 generated by the screen generating module 31a may be outputted to the external device 151 through a communication part 150 of the radar indicator 20, and the external device 151 may execute the above processings of the bird detecting module 31b, the bird tracking module 31c, and the information outputting module 31d.

<4-5>

Although in the above embodiment the directional information and the LL information are acquired using the GPS compass 60, similar information may also be acquired using a magnetic compass, a gyrocompass, or a GPS sensor.

<4-6>

In the above embodiment, the bird detecting module 31b may calculate the accuracy of the final detection of the flock of birds. In this case, the information indicative of the existence of the flock of birds may be outputted only when the accuracy of the detection exceeds a given threshold. Further, the user may then adjust the threshold. The accuracy of the detection may be determined based on, for example, the output value from the analytical model 41 (in this case, the analytical model 41 learns beforehand so as to output a value corresponding to the probability of the target object indicated in the inputted image being a flock of birds), and the probability of succeeding in the tracking processing at Step S3.

<4-7>

Although in this embodiment the bird detection processing is executed when the bird mode is selected in the radar indicator 20, the bird detection processing may also be executed when the bird mode is not selected. For example, when the user commanded an execution of the bird detection processing through the input part 22, the radar image 51 in the bird mode is internally generated without being displayed on the display part 21, and the detection of the flock of birds is executed based on the radar image 51. Then, when the flock of birds is finally detected, audio or a message expressing the final detection may be outputted. In this case, the symbol of the flock of birds may also be displayed over the radar image 51 in the normal mode.

<4-8>

Although in this embodiment the bird tracking module 31c cuts the partial image for every scan up to the n-th scan, and detects and tracks the flock of birds based on the analytical model 41, the detection of the flock of birds based on the analytical model 41 may be executed only when the tracking begins (i.e., when n=1).

In this case, the bird tracking module 31c may track the echo image from which the flock of birds is detected for the first time (i.e., when n=1) by the conventional TT (Target Tracking), and then determine the success or failure of tracking of the flock of birds by determining whether the location of the tracked echo image is located within the area of the prediction gate G(n) in the subsequent scan (n).

**Description of Reference Characters**

| | |
|---|---|
| 1 | Radar Device |
| 10 | Radar Antenna |
| 20 | Radar Indicator (Computer) |
| 21 | Display Part |
| 23 | Memory Part |
| 25 | Radar Interface Part (Acquisition Part) |
| 31a | Screen Generating Module (Generation Part) |
| 31b | Bird Detecting Module (Detecting Part) |
| 31c | Bird Tracking Module (Tracking Part) |
| 31d | Information Outputting Module (Information Output Part, Output Part) |
| 40 | Program (Target Object Detection Program) |
| 41 | Analytical Model (Model) |
| 50 | Radar Screen |
| 51 | Radar Image |
| 60 | GPS Compass |
| 101 | Learning Device |
| 124 | Control Part |
| 124a | Screen Generating Module |
| 124b | Learning Module (Learning Part) |
| 125 | Communication Part (Acquisition Part) |
| T1 | Image of Other Ships |
| T2 | Image of Flock of Birds |
| T4 | Echo Trail |
| T5 | Symbol |

**Claims**

1. A target object detecting device (1), comprising:

   an acquisition part (25) configured to acquire echo signals from target objects around a ship;
   a generation part (31a) configured to generate a first echo image based on the echo signals; and
   a detecting part (31b) configured to input the first echo image into a model (41) built by machine learning, and detect a first target object that is a target object other than a ship corresponding to the model (41), based on an output from the model (41).

2. The target object detecting device (1) of claim 1, wherein the first target object includes a bird.

3. The target object detecting device (1) of claim 1 or 2, wherein the first target object includes at least one selected from the group consisting of a school of fish, a rock, a current rip, ice, rain, clouds, and SART.

4. The target object detecting device (1) of any one of claims 1 to 3, wherein the generation part (31a) adjusts the echo signals so that a reflected wave at the first target object weaker than a reflected wave at a ship is caught, and generates the first echo image based on the adjusted echo signals.

5. The target object detecting device (1) of any one of claims 1 to 4, wherein the generation part (31a) further generates a second echo image in which noise is less than the first echo image, and an image of a ship is indicated more clearly, based on the echo signals.

6. The target object detecting device (1) of claim 5, wherein the generation part (31a) generates the first echo image by adjusting the echo signals so that at least one of raising a gain more than when generating the second echo image, lowering a level of removal of sea surface reflections, and lowering a level of removal of rain and snow clutters is performed.

7. The target object detecting device (1) of claim 5 or 6, further comprising an information output part (31d) configured to display a symbol corresponding to the detected first target object over the second echo image.

8. The target object detecting device (1) of any one of claims 1 to 6, further comprising an information output part (31d) configured to display a symbol corresponding to the detected first target object over the first echo image.

9. The target object detecting device (1) of any one of claims 1 to 8, wherein the first echo image is a true echo trail image.

10. The target object detecting device (1) of any one of claims 1 to 9, further comprising a tracking part (31c) configured to track a location of the detected first target object using a tracking filter.

11. The target object detecting device (1) of claim 10, further comprising an output part (31d) configured to output information indicating that the first target object exists, when the tracking part (31c) continuously succeeded in the tracking of the first target object.

12. The target object detecting device (1) of any one of claims 1 to 11, wherein the model (41) is a neural network.

**13.** The target object detecting device (1) of any one of claims 1 to 12, further comprising a radar antenna (10) configured to receive the echo signals.

**14.** A method of detecting a target object, comprising:

acquiring echo signals of target objects around a ship;

generating a first echo image based on the echo signals; and

inputting the first echo image into a model (41) built by machine learning, and detecting a first target object that is a target object other than a ship corresponding to the model (41), based on an output from the model (41).

**15.** A computer readable medium configured to store a computer executable program (40) in a non-transitory manner, which upon execution by a processor of a computer causes the computer to authenticate a control device, comprising:

causing a computer to acquire echo signals from target objects around a ship;

causing a computer to generate a first echo image based on the echo signals; and

causing a computer to input the first echo image into a model (41) built by machine learning, and detect a first target object that is a target object other than a ship corresponding to the model (41), based on an output from the model (41).

FIG. 1

EP 3 505 951 A1

FIG. 2

FIG. 3

BIRD MODE

51   U1   55   50   52

T4

T1   T2

T4   T1

T4

T4   T1

T4

T3   T2   T4

T1   T3

MENU

T1

56   T4

# FIG. 4

51

NORMAL MODE

FIG. 5A

51

BIRD MODE

FIG. 5B

BIRD MODE

FIG. 6

FIG. 7

RADAR IMAGE, OR
ECHO SIGNAL, DIRECTIONAL INFO AND LL(LATITUDE AND LONGITUDE) INFO, SHIP SPEED INFO
AND CORRECT ANSWER INFO

101

LEARNING DEVICE
(COMPUTER)

121

DISPLAY PART

125

COMMUNICATION
PART

122

INPUT PART

123

CONTROL PART

SCREEN
GENERATING
MODULE

124a

LEARNING
MODULE

124b

124

MEMORY PART

PROGRAM

140

51

RADAR IMAGE

⇔
⇔
⇔
⇔

CORRECT
ANSWER
INFO

FIG. 8

FIG. 9

FIG. 10

FIG. 11A

FIG. 11B

EP 3 505 951 A1

```
                    ┌─────────┐
                    │  START  │
                    └────┬────┘
                         ▼
        ┌──────────────────────────────┐  S21
        │      ACQUIRE ECHO SIGNAL      │
        └──────────────┬───────────────┘
                       ▼
        ┌──────────────────────────────┐  S22
        │ ADJUST ECHO SIGNAL SO AS TO   │
        │ CATCH REFLECTED WAVE AT       │
        │ FLOCK OF BIRDS                │
        └──────────────┬───────────────┘
                       ▼
        ┌──────────────────────────────┐  S23
        │ GENERATE RADAR IMAGE IN BIRD  │
        │ MODE BASED ON ADJUSTED        │
        │ ECHO SIGNAL                   │
        └──────────────┬───────────────┘
                       ▼
        ┌──────────────────────────────┐  S24
        │ INPUT RADAR IMAGE IN BIRD     │
        │ MODE INTO MODEL BUILT BY      │
        │ MACHINE LEARNING AND DETECT   │
        │ (TEMPORARILY) FLOCK OF BIRDS  │
        └──────────────┬───────────────┘
                       ▼                      S25
                ◇ FLOCK OF BIRDS DETECTED? ◇ ──NO──┐
                       │                            │
                      YES                           │
                       ▼                            │
        ┌──────────────────────────────┐  S26       │
        │     TRACK FLOCK OF BIRDS      │            │
        └──────────────┬───────────────┘            │
                       ▼                            │
              ◇ TRACK SUCCESS              ◇ ──NO──┐ │
              ◇ I TIMES CONTINUOUSLY?      ◇       │ │
        S27    │                                   │ │
              YES                ◇ TRACK           │ │
               │                 ◇ UNSUCCESS J     ◇─NO─┤
               │                 ◇ TIMES OR MORE?  ◇    │
               │                      │                 │
               ▼                     YES                │
   ┌────────────────────┐  S28  ┌────────────────────┐ S29
   │ DISPLAY SYMBOL     │       │ DISPLAY RADAR IMAGE│
   │ CORRESPONDING TO   │       │ IN BIRD MODE       │
   │ FLOCK OF BIRDS ON  │       │ WITHOUT DISPLAYING │
   │ RADAR IMAGE IN     │       │ SYMBOL             │
   │ BIRD MODE          │       │ CORRESPONDING TO   │
   │                    │       │ FLOCK OF BIRDS     │
   └─────────┬──────────┘       └─────────┬──────────┘
             └────────────┬───────────────┘
                          ▼
                    ┌─────────┐
                    │   END   │
                    └─────────┘
```

# FIG. 12

24

FIG. 13

Europäisches
Patentamt

European
Patent Office

Office européen
des brevets

**EUROPEAN SEARCH REPORT**

Application Number

EP 18 24 8125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/127013 A1 (NISHIYAMA KOJI [JP]) 24 May 2012 (2012-05-24) * paragraphs [0002] - [0039] * * paragraphs [0069] - [0102] * * figure 13 * | 1-15 | INV. G01S7/04 G01S7/292 G01S7/41 G01S13/42 G01S13/72 G01S13/89 G01S13/88 |
| Y | US 4 894 661 A (FURUNO KIYOTAKA [JP] ET AL) 16 January 1990 (1990-01-16) * column 1, line 1 - column 5, line 68 * * column 8, line 50 - column 9, line 37 * * figures 2(A), 2(B), 4 * | 1-15 | |
| Y | US 2011/298651 A1 (NAKAGAWA KAZUYA [JP] ET AL) 8 December 2011 (2011-12-08) * paragraphs [0050] - [0057], [0085] * | 1-15 | |
| Y | EP 2 233 946 A1 (HONEYWELL INT INC [US]) 29 September 2010 (2010-09-29) * paragraphs [0013], [0014], [0019] * | 1-15 | |

TECHNICAL FIELDS SEARCHED (IPC)

G01S

The present search report has been drawn up for all claims

| Place of search | Date of completion of the search | Examiner |
|---|---|---|
| Munich | 10 May 2019 | Hirsch, Stefanie |

## ANNEX TO THE EUROPEAN SEARCH REPORT
## ON EUROPEAN PATENT APPLICATION NO.

EP 18 24 8125

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2019

| Patent document cited in search report | | Publication date | Patent family member(s) | | Publication date |
|---|---|---|---|---|---|
| US 2012127013 | A1 | 24-05-2012 | CN | 102540174 A | 04-07-2012 |
| | | | JP | 5616200 B2 | 29-10-2014 |
| | | | JP | 2012108050 A | 07-06-2012 |
| | | | US | 2012127013 A1 | 24-05-2012 |
| US 4894661 | A | 16-01-1990 | GB | 2191055 A | 02-12-1987 |
| | | | GB | 2228158 A | 15-08-1990 |
| | | | US | 4894661 A | 16-01-1990 |
| US 2011298651 | A1 | 08-12-2011 | CN | 102353941 A | 15-02-2012 |
| | | | JP | 5607428 B2 | 15-10-2014 |
| | | | JP | 2011252822 A | 15-12-2011 |
| | | | US | 2011298651 A1 | 08-12-2011 |
| EP 2233946 | A1 | 29-09-2010 | AT | 543107 T | 15-02-2012 |
| | | | EP | 2233946 A1 | 29-09-2010 |
| | | | US | 2010245166 A1 | 30-09-2010 |

EPO FORM P0459

For more details about this annex : see Official Journal of the European Patent Office, No. 12/82